# FASCICULE DE BREVET EUROPEEN

(11) **EP 2 693 070 B1**
(45) Date de publication et mention de la délivrance du brevet: **16.05.2018**
(21) Numéro de dépôt: 13175784.1
(22) Date de dépôt: 09.07.2013
(51) Int. Cl.: F16D 13/58

(54) **Mécanisme d'embrayage, notamment pour véhicule automobile**
Kupplungsmechanismus, insbesondere für Kraftfahrzeug
Clutch mechanism, in particular for an automobile

(30) Priorité: 03.08.2012 FR 1257596
(43) Date de publication de la demande: 05.02.2014
(73) Titulaire: Valeo Embrayages, 80009 Amiens Cedex 2 (FR)
(72) Inventeur: Brailly, Julien, 80300 Dernancourt (FR); Deliencourt, Nicolas, 80600 Doullens (FR)
(74) Mandataire: Cardon, Nicolas

(56) Documents cités:
- EP-A2- 0 797 016
- DE-A1-102011 105 989
- FR-A1- 2 868 491
- FR-A1- 2 919 032
- FR-A5- 2 242 893
- GB-A- 2 222 439
- GB-A- 2 296 541

## Description

La présente invention concerne un mécanisme d'embrayage, notamment pour véhicule automobile.

Dans un véhicule automobile, l'embrayage est destiné à coupler en rotation un arbre moteur, tel par exemple qu'un vilebrequin, et un arbre d'entrée d'une boîte de vitesses.

L'embrayage comprend habituellement un mécanisme comportant un couvercle dans lequel est logé un diaphragme annulaire basculant entre une position embrayée et une position débrayée de manière à déplacer un plateau de pression. Le diaphragme pivote autour respectivement d'une première et d'une seconde zones d'appui s'étendant circonférentiellement et situées de part et d'autre du diaphragme, respectivement entre le diaphragme et le couvercle et entre le diaphragme et le plateau de pression. Le couvercle, le diaphragme et le plateau de pression sont solidaires en rotation.

Un tel mécanisme est décrit par exemple dans le document EP 2 048 397 au nom de la Demanderesse. Dans ce document, la première zone d'appui est formée par une zone annulaire en saillie venant de matière avec le couvercle.

Le diaphragme annulaire forme ainsi un levier articulé autour des deux zones d'appui et comporte à sa périphérie radialement interne des doigts radiaux coopérant avec une butée d'embrayage dont le déplacement entraîne le basculement du diaphragme entre ses positions embrayée et débrayée. La périphérie externe du diaphragme permet quant à elle de déplacer le plateau de pression.

La butée d'embrayage est commandée par exemple par un actionneur piloté par un calculateur électronique afin d'exercer une force prédéterminée sur le diaphragme et de le déplacer sur une distance donnée.

Le plateau de pression, sollicité par le diaphragme, est destiné à serrer un disque de friction sur un plateau de réaction coaxial au plateau de pression et au disque de friction.

Le disque de friction est lié en rotation à l'arbre d'entrée de la boîte de vitesses et le plateau de réaction est solidaire en rotation du couvercle et d'un volant lié à l'arbre moteur. Ainsi, le serrage d'un disque de friction entre les plateaux de pression et de réaction permet la transmission d'un couple entre l'arbre moteur et l'arbre d'entrée de la boîte de vitesses.

L'utilisation de l'embrayage provoque une usure des garnitures de friction du disque de friction ainsi que des contre-matériaux des plateaux de pression et de réaction associés. Ceci se traduit par une variation de la position du plateau de pression par rapport au diaphragme et/ou au plateau de réaction associé, générant une variation de l'effort de serrage du disque de friction et/ou une modification du point de léchage et de la course de la butée d'embrayage. On rappelle que le point de léchage est la position à partir de laquelle une partie du couple du moteur est transmise à l'arbre de la boîte de vitesses lors de la fermeture de l'embrayage.

Le document FR 2 847 626, au nom de la Demanderesse, propose un embrayage équipé de moyens de rattrapage d'usure interposés entre un plateau de pression et un diaphragme monté sur un couvercle fixé à un plateau de réaction. Ces moyens de rattrapage d'usure comportent un anneau à rampes circonférentielles qui coopèrent avec des contre-rampes complémentaires du plateau de pression. L'anneau à rampes sert également à l'appui du diaphragme de sorte que la rotation de l'anneau par rapport au plateau de pression entraîne le déplacement des rampes par rapport aux contre-rampes et, donc, le déplacement axial du plateau de pression par rapport au diaphragme, au couvercle et au plateau de réaction. On fait ainsi varier la distance entre le plateau de pression et le plateau de réaction associé, d'une façon qui compense l'usure.

Un organe denté est en outre fixé sur l'anneau à rampes et engrène avec une vis sans fin montée dans une cassette fixée au couvercle, l'organe denté étant au droit de la vis sans fin.

La vis sans fin est couplée en rotation avec une roue à rochet coopérant avec un cliquet fixé sur le couvercle. La vis sans fin et/ou la roue à rochet sont plaquées par un organe élastique contre une aile de la cassette.

Le cliquet se présente sous la forme d'une lamelle élastique présentant une languette de commande coopérant avec les dents de la roue à rochet de façon à autoriser la rotation de la roue à rochet dans un sens de rotation, en cas d'usure, et à empêcher la rotation de la roue à rochet dans le sens de rotation contraire, le diaphragme venant en appui contre une languette de rappel du cliquet, de manière à déplacer la languette de commande lors de son actionnement. Le cliquet comportant en outre des butées de contrôle destinées à venir en appui sur un couvercle fixe par rapport au plateau de réaction, lors de l'actionnement du diaphragme

De cette manière, en cas d'usure et lors des actionnements successifs du diaphragme, le cliquet entraîne la rotation de la roue à rochet et de la vis sans fin, cette dernière entraînant la rotation de l'anneau portant les rampes, par l'intermédiaire de l'organe denté. On augmente ainsi progressivement la distance entre le plateau de pression et le couvercle et on diminue progressivement la distance entre le plateau de pression et le plateau de réaction associé, de façon à compenser l'usure.

Dans le document EP 2 048 397 précité, le mécanisme d'embrayage est également équipé de tels moyens de rattrapage d'usure.

Lorsque l'embrayage est équipé de tels moyens de rattrapage d'usure, le diaphragme est généralement soumis à des contraintes et à des efforts mécaniques relativement importants lors des phases d'embrayage et de débrayage. En effet, ces moyens de rattrapage d'usure sont généralement utilisés pour des applications à fort couple moteur, nécessitant des efforts importants sur le plateau de pression.

Dans un tel cas également, la position du diaphragme reste constante et sa zone d'appui sur la zone annulaire en saillie du couvercle reste inchangée, ce qui favorise l'usure de cette zone en saillie.

Ainsi, lors d'une phase d'embrayage, la zone annulaire en saillie du couvercle servant à l'articulation du diaphragme est soumise à des contraintes mécaniques importantes et localisées qui peuvent provoquer son usure. En effet, dans la technique actuelle, le couvercle est réalisé dans un matériau présentant une dureté relativement faible, le couvercle devant être réalisé par emboutissage. Par conséquent, la zone annulaire en saillie venant de matière avec le couvercle a également une dureté faible.

Un tel phénomène d'usure induit un mauvais positionnement du diaphragme et engendre un décalage de la courbe caractéristique de l'embrayage. On assiste en particulier à une augmentation de l'effort au niveau de la butée d'embrayage et du plateau de pression. En d'autres termes, cela affecte le comportement et les performances de l'embrayage. Ceci est à éviter, en particulier dans le cas d'un embrayage équipé de moyens de rattrapage d'usure où l'on considère que la position du diaphragme est maîtrisée.

Le document DE 10 2010 054 288 propose un mécanisme d'embrayage dans lequel la première zone d'appui, située entre le couvercle et le diaphragme et servant à l'articulation du diaphragme, est formée par un jonc annulaire distinct du couvercle. Dans ce cas, il est possible de réaliser le jonc dans un matériau plus dur de manière à ce que ce dernier puisse supporter les contraintes mécaniques appliquées par le diaphragme, notamment lors de la phase d'embrayage.

Dans ce cas toutefois, la zone de contact entre le jonc et le couvercle est limitée à un cercle, de sorte que le couvercle est soumis localement à des contraintes importantes (lors d'une phase d'embrayage en particulier), ce qui peut provoquer un enfoncement du jonc dans le couvercle et engendrer comme précédemment un mauvais positionnement du diaphragme. En outre, le montage du jonc entre le couvercle et le diaphragme, le centrage et le maintien de ce jonc sur le couvercle sont relativement fastidieux.

Le document FR2242893 décrit également une pièce d'appui comprenant une nervure d'appui en saillie pour appui contre le diaphragme. A cet effet, elle propose un mécanisme pour embrayage selon la revendication 1.

L'utilisation d'une rondelle d'appui présentant une surface étendue d'appui sur le couvercle permet de limiter les contraintes mécaniques auxquelles est soumis le couvercle et d'éviter ainsi une dégradation de la rondelle d'appui et/ou du couvercle, de façon à garantir le bon positionnement du diaphragme.

En outre, l'utilisation d'une rondelle distincte du couvercle permet d'utiliser un matériau relativement dur pour sa réalisation. Cette rondelle peut également subir plus facilement un traitement thermique, tel qu'une trempe, permettant d'augmenter encore sa dureté.

Selon une caractéristique de l'invention, la rondelle d'appui comporte des trous servant au montage de moyens de fixation de ladite rondelle d'appui sur le couvercle.

Ainsi, la rondelle d'appui peut être fixée de manière relativement simple sur le couvercle.

De préférence, la zone en saillie est formée par emboutissage dans la rondelle d'appui.

Selon une autre caractéristique de l'invention, la zone en saillie est de forme annulaire et s'étend de façon continue ou est formée de segments adjacents s'étendant sur la circonférence de la rondelle d'appui.

La formation de la zone en saillie en plusieurs segments distincts facilite la réalisation de la rondelle d'appui par emboutissage.

Selon une forme de réalisation de l'invention, le mécanisme comporte une rondelle d'assistance déformable élastiquement, comportant au moins une patte d'assistance destinée à venir en appui sur une butée d'embrayage servant à l'actionnement du diaphragme ou sur des doigts du diaphragme, de façon à augmenter l'effort appliqué sur le diaphragme lors du débrayage.

Dans ce cas, la rondelle d'appui et la rondelle d'assistance peuvent être formées d'une seule et même rondelle, comportant une partie annulaire radialement externe comprenant la zone en saillie formant la première zone d'appui du diaphragme et une partie annulaire radialement interne à partir de laquelle la patte d'assistance s'étend radialement vers l'intérieur.

Les parties annulaires radialement interne et externe peuvent être reliées l'une à l'autre par des zones de liaison s'étendant radialement.

Une telle structure confère une bonne élasticité à la partie radialement interne à partir de laquelle la patte d'assistance s'étend radialement vers l'intérieur.

La seconde zone d'appui peut être formée par au moins un organe d'appui fixé sur le couvercle.

Avantageusement, l'organe d'appui a une section en C et comporte une première branche de fixation au couvercle et une seconde branche dont l'extrémité libre forme la seconde zone d'appui du diaphragme.

Dans ce cas, l'organe d'appui peut être élastique, de sorte que sa seconde branche tend à plaquer le diaphragme en appui contre la zone en saillie de la rondelle d'appui.

Enfin, le mécanisme peut comporter des moyens de rattrapage d'usure aptes à rapprocher le plateau de pression du plateau de réaction.

Ces moyens de rattrapage d'usure peuvent présenter une structure similaire à celle décrite précédemment de façon à garantir le bon fonctionnement de l'embrayage sur une longue durée.

On notera que l'invention n'est pas limitée aux embrayages équipés de tels moyens de rattrapage d'usure mais est bien adaptée à ce mode de réalisation, dans lequel le diaphragme peut être soumis à des efforts relativement importants.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective, de dessus, d'un mécanisme d'embrayage selon l'invention ;
- la figure 2 est une vue en perspective, de dessous, d'un mécanisme d'embrayage selon l'invention ;
- les figures 3 et 4 sont des demi-vues en coupe, respectivement selon les lignes A et B de la figure 1 ;
- la figure 5 est une vue en perspective d'une rondelle assurant à la fois la fonction d'appui et la fonction d'assistance.

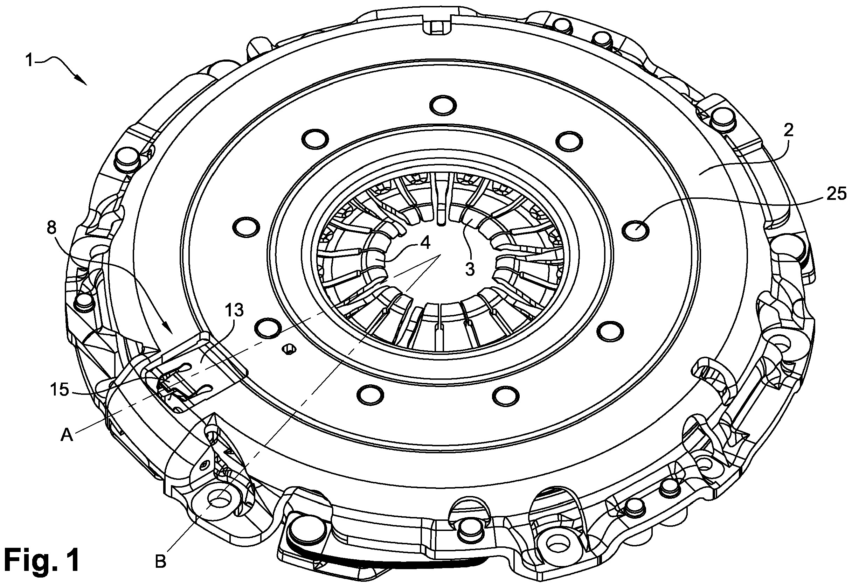

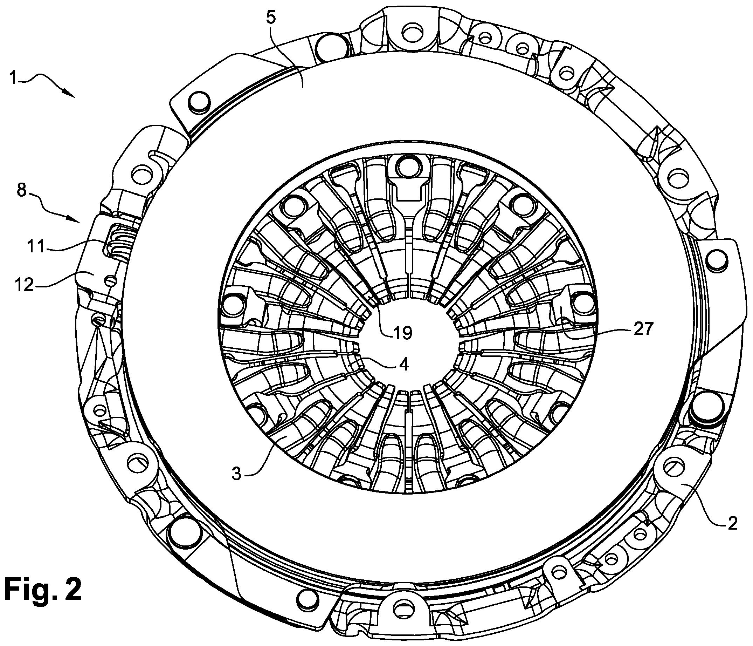

Les figures 1 à 4 illustrent un mécanisme 1 d'embrayage de véhicule automobile selon l'invention, comportant un couvercle 2 de forme générale de révolution, destiné à être relié en rotation avec un volant moteur (non représenté) du véhicule automobile, à l'aide de moyens classiques. Un diaphragme annulaire 3, déformable élastiquement, est logé dans le couvercle 2. Ce couvercle 2 et le diaphragme 3 sont sensiblement coaxiaux.

Le diaphragme 3 est muni de doigts 4 s'étendant radialement vers l'intérieur. Ces doigts 4 sont repliés axialement de façon à conférer au diaphragme 3 son élasticité.

Lorsque l'embrayage est assemblé sur le véhicule automobile, le diaphragme 3 est actionné par une butée de commande (non représentée) et coopère avec un plateau de pression 5 logé dans le couvercle 2 et solidaire en rotation de ce dernier.

Lorsque le diaphragme 3 est au repos, il exerce un effort sur le plateau de pression 5, de façon à enserrer un disque de friction (non représenté) entre ce plateau de pression 5 et un plateau de réaction (non représenté), couplant ainsi le disque de friction avec le mécanisme 1 (position embrayée).

Lorsque la butée de commande est actionnée, elle exerce un effort axial sur les doigts 4 du diaphragme 3, ce qui provoque la déformation élastique du diaphragme 3. Le diaphragme 3 pivote alors de façon à relâcher le plateau de pression 5, libérant ainsi le disque de friction (position débrayée).

Plus particulièrement, le diaphragme 3 est articulé autour d'une première et d'une seconde zones d'appui 6, 7 s'étendant circonférentiellement et situées de part et d'autre du diaphragme 3, respectivement entre le diaphragme 3 et le couvercle 2 et entre le diaphragme 3 et le plateau de pression 5.

Le mécanisme 1 est en outre équipé de moyens de rattrapage d'usure 8 interposés entre un plateau de pression 5 et le diaphragme 3. Ces moyens de rattrapage d'usure 8 comportent un anneau 9 à rampes circonférentielles qui coopèrent avec des contre-rampes complémentaires du plateau de pression 5. L'anneau à rampes 8 sert également à l'appui (en 10) du diaphragme 3 de sorte que la rotation de l'anneau 9 par rapport au plateau de pression 5 entraîne le déplacement des rampes par rapport aux contre-rampes et, ainsi, le déplacement axial du plateau de pression 5 par rapport au diaphragme 3, au couvercle 2 et au plateau de réaction. On fait ainsi varier la distance entre le plateau de pression 5 et le plateau de réaction associé, d'une façon qui compense l'usure.

Un organe denté (non visible aux figures) est en outre fixé sur l'anneau à rampes 8 et engrène avec une vis sans fin 11 montée dans une cassette 12 fixée au couvercle 2, l'organe denté étant au droit de la vis sans fin 11.

La vis sans fin 11 est couplée en rotation avec une roue à rochet (non visible) coopérant avec un cliquet 13 fixé sur le couvercle 2. La vis sans fin 11 et/ou la roue à rochet sont plaquées par un organe élastique contre une aile de la cassette 12.

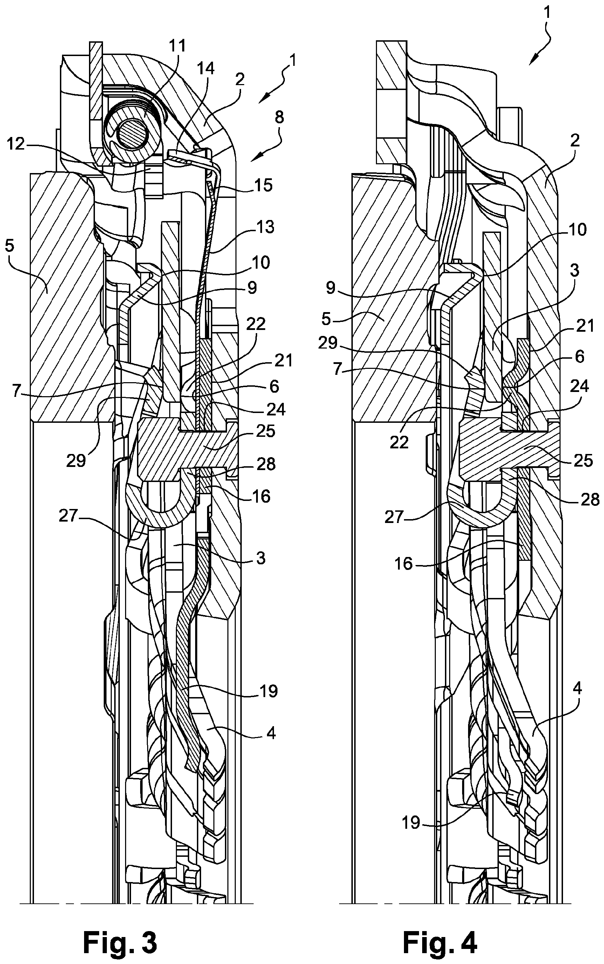

Le cliquet 13 se présente sous la forme d'une lamelle élastique présentant une languette de commande 14 (figure 3) coopérant avec les dents de la roue à rochet de façon à autoriser la rotation de la roue à rochet dans un sens de rotation, en cas d'usure, et à empêcher la rotation de la roue à rochet dans le sens de rotation contraire, le diaphragme 3 venant en appui contre une languette de rappel 15 du cliquet 13, de manière à déplacer la languette de commande 14 lors de son actionnement. Le cliquet 13 comporte en outre des butées de contrôle (non visibles) destinées à venir en appui sur le couvercle 2 fixe par rapport au plateau de réaction, lors de l'actionnement du diaphragme 3.

De cette manière, en cas d'usure et lors des actionnements successifs du diaphragme 3, le cliquet 13 entraîne la rotation de la roue à rochet et de la vis sans fin 11, cette dernière entraînant la rotation de l'anneau 9 portant les rampes, par l'intermédiaire de l'organe denté. On augmente ainsi progressivement la distance entre le plateau de pression 5 et le couvercle 2 et on diminue progressivement la distance entre le plateau de pression 5 et le plateau de réaction associé, de façon à compenser l'usure.

Lorsque l'embrayage est équipé de tels moyens de rattrapage d'usure, le diaphragme 3 est généralement soumis à des contraintes et à des efforts mécaniques relativement importants lors des phases d'embrayage et de débrayage.

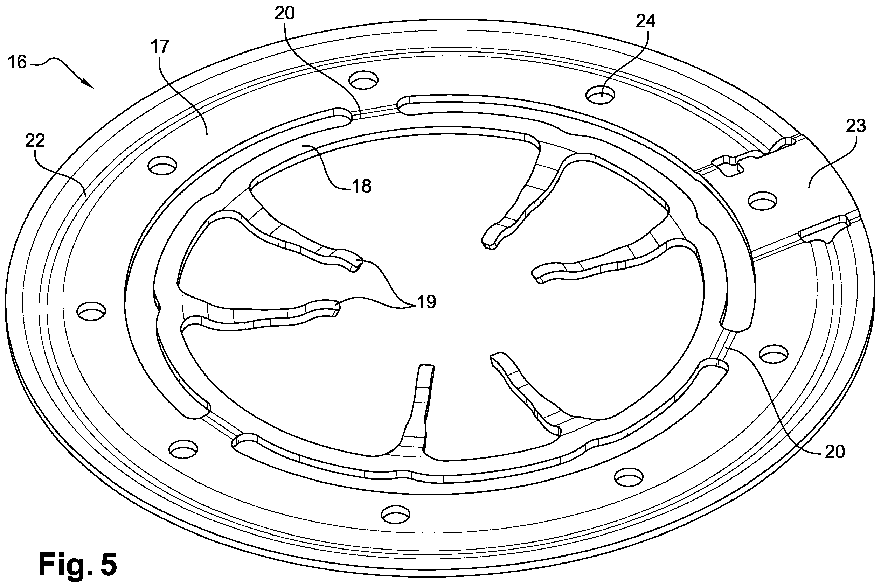

Une rondelle d'appui 16 est montée axialement entre le couvercle 2 et le diaphragme 3. Cette rondelle 16 est mieux visible à la figure 5 et comporte une partie annulaire 17 radialement externe et une partie annulaire 18 radialement interne à partir de laquelle des pattes élastiques d'assistance 19 s'étendent radialement vers l'intérieur.

Dans la forme de réalisation représentée aux figures, les pattes d'assistance 19 s'étendent entre les doigts radiaux 4 du diaphragme 3 et sont destinées à venir en appui sur la butée d'embrayage servant à l'actionnement du diaphragme 3. Dans une variante non représentée, les pattes d'assistance 19 peuvent prendre appui sur les doigts 4 du diaphragme 3, comme cela est notamment connu du document EP 2 048 397, au nom de la Demanderesse. Dans tous les cas, ces pattes d'assistance 19 servent à augmenter l'effort appliqué sur le diaphragme 3 lors du débrayage.

Les parties annulaires radialement interne et externe 17, 18 sont reliées l'une à l'autre par des zones de liaison 20 s'étendant radialement.

La partie externe 17 est sensiblement plane et comprend une surface plane relativement importante, en appui sur une surface plane correspondante 21 du couvercle 2 (figure 3 et 4). La rondelle d'appui 16 comporte également une zone en saillie 22 formant à son sommet la première zone d'appui 6 du diaphragme 3. Cette zone en saillie 22 est formée par emboutissage dans la rondelle d'appui. Un dégagement 23 (figure 5) peut également être formé par emboutissage dans la rondelle d'appui 16, de façon à permettre le passage et l'actionnement du cliquet 13.

La partie externe 17 comporte en outre des trous 24 servant au montage de rivets 25 permettant la fixation de ladite rondelle d'appui 16 sur le couvercle 2.

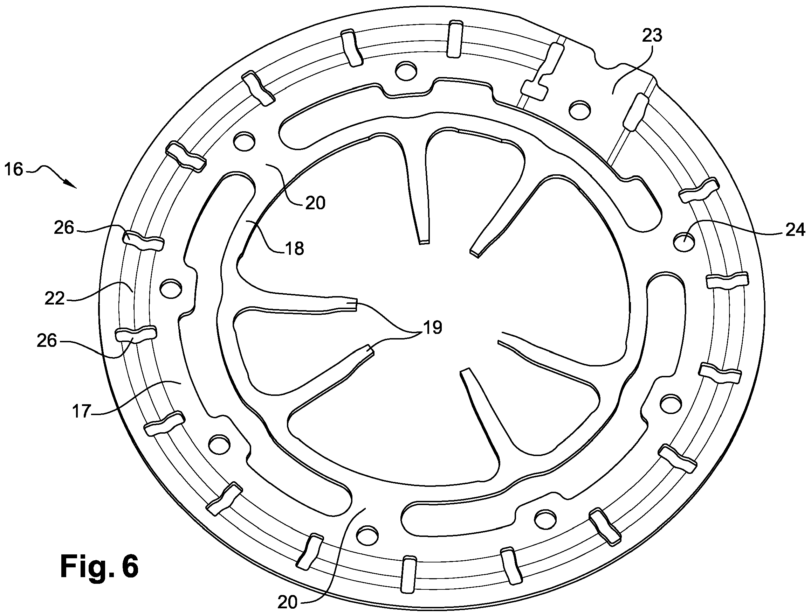

Dans la forme de réalisation de la figure 5, la zone en saillie 22 est annulaire et s'étend de façon continue sur toute la circonférence. Dans une autre forme de réalisation représentée à la figure 6, la zone en saillie 22 est formée de segments adjacents séparés par des lumières oblongues radiales 26.

La seconde zone d'appui 7 est formée par des organes d'appui 27 fixés sur le couvercle 2 à l'aide des rivets 25.

Chaque organe d'appui 27 a une section en C et comporte une première branche 28 de fixation au couvercle 2 et une seconde branche 29 dont l'extrémité libre forme la seconde zone d'appui 7 du diaphragme 3 (figures 3 et 4). Chaque organe d'appui 27 est élastique, de sorte que sa seconde branche 29 tend à plaquer le diaphragme 3 en appui contre la zone en saillie 22 de la rondelle d'appui 16.

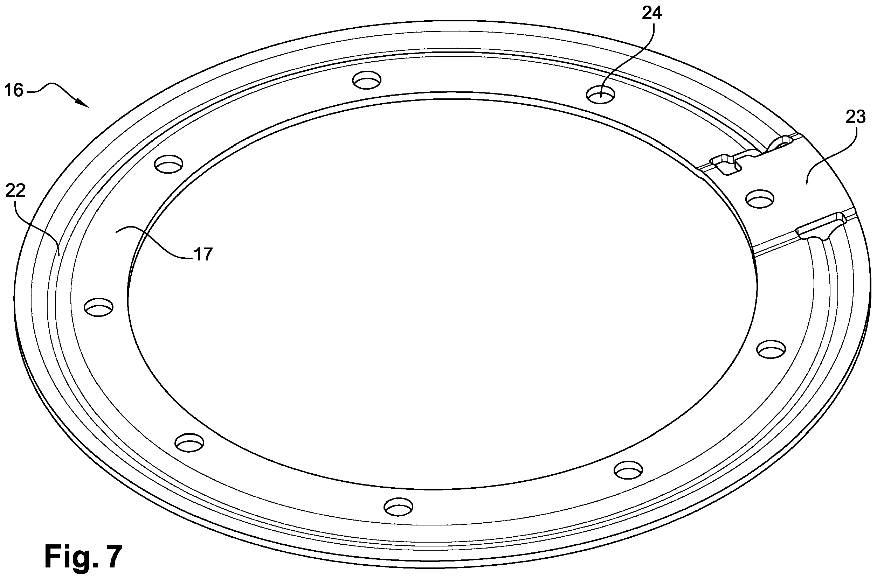

La figure 7 illustre encore une autre variante de réalisation dans laquelle la rondelle d'appui 16 est dépourvue de la partie annulaire interne 18 et est dépourvue de patte d'assistance 19.

Comme indiqué précédemment, l'utilisation d'une rondelle d'appui 16 présentant une surface étendue d'appui sur le couvercle 2 permet de limiter les contraintes mécaniques auxquelles est soumis le couvercle 2 et éviter ainsi une dégradation de la rondelle d'appui 16 et/ou du couvercle 2, de façon à garantir le bon positionnement du diaphragme 3.

En outre, l'utilisation d'une rondelle distincte 16 du couvercle 2 permet de pouvoir utiliser un matériau relativement dur pour sa réalisation. Cette rondelle 16 peut également subir plus facilement un traitement thermique, tel qu'une trempe, permettant d'augmenter encore sa dureté.

## Revendications

1. Mécanisme (1) d'embrayage, notamment pour véhicule automobile, comportant un couvercle (2) dans lequel est logé un diaphragme annulaire (3) basculant entre une position embrayée et une position débrayée pour déplacer un plateau de pression (5) destiné à coopérer avec un plateau de réaction opposé de façon à enserrer un disque de friction, le diaphragme (3) pivotant autour respectivement d'une première et d'une seconde zones d'appui (6, 7) s'étendant circonférentiellement et situées de part et d'autre du diaphragme (3), respectivement entre le diaphragme (3) et le couvercle (2) et entre le diaphragme (3) et le plateau de pression (5), et une rondelle d'appui (16) montée sur le couvercle (2) et comprenant au moins une surface étendue, par exemple une surface plane, en appui sur une surface correspondante (21) du couvercle (2), ladite rondelle d'appui (16) comportant au moins une zone en saillie (22) formant la première zone d'appui (6) du diaphragme (3), **caractérisé en ce qu'**il comporte une rondelle d'assistance déformable élastiquement, comportant au moins une patte d'assistance (19) destinée à venir en appui sur une butée d'embrayage servant à l'actionnement du diaphragme (3) ou sur des doigts (4) du diaphragme (3), de façon à augmenter l'effort appliqué sur le diaphragme (3) lors du débrayage et **en ce que** la rondelle d'appui et la rondelle d'assistance sont formées d'une seule et même rondelle (16), comportant une partie annulaire radialement externe (17) comprenant la zone en saillie (22) formant la première zone d'appui (6) du diaphragme (3) et une partie annulaire radialement interne (18) à partir de laquelle la patte d'assistance (19) s'étend radialement vers l'intérieur.

2. Mécanisme (1) d'embrayage selon la revendication 1, **caractérisé en ce que** la rondelle d'appui (16) comporte des trous (24)
servant au montage de moyens de fixation (25) de ladite rondelle d'appui (16) sur le couvercle (2).

3. Mécanisme (1) d'embrayage selon la revendication 1 ou 2, **caractérisé en ce que** la zone en saillie (22) est formée par emboutissage dans la rondelle d'appui (16).

4. Mécanisme (1) d'embrayage selon l'une des revendications 1 à 3, **caractérisé en ce que** la zone en saillie (22) est de forme annulaire et s'étend de façon continue ou est formée de segments adjacents s'étendant sur la circonférence de la rondelle d'appui (16).

5. Mécanisme (1) d'embrayage selon l'une des revendications 1 à 4, **caractérisé en ce que** les parties annulaires radialement interne et externe (17, 18) sont reliées l'une à l'autre par des zones de liaison (20) s'étendant radialement.

6. Mécanisme (1) d'embrayage selon l'une des revendications 1 à 5, **caractérisé en ce que** la seconde zone d'appui (7) est formée par au moins un organe d'appui (27) fixé sur le couvercle (2).

7. Mécanisme (1) d'embrayage selon l'une des revendications 1 à 6, **caractérisé en ce que** l'organe d'appui (27) a une section en C et comporte une première branche (28) de fixation au couvercle (2) et une seconde branche (29) dont l'extrémité libre forme la seconde zone d'appui (7) du diaphragme (3).

8. Mécanisme (1) d'embrayage selon la revendication 7, **caractérisé en ce que** l'organe d'appui (27) est élastique, de sorte que sa seconde branche (29) tend à plaquer le diaphragme (3) en appui contre la zone en saillie (22) de la rondelle d'appui (16).

9. Mécanisme (1) d'embrayage selon l'une des revendications 1 à 8, **caractérisé en ce qu'**il comporte des moyens de rattrapage d'usure (8) aptes à rapprocher le plateau de pression (5) du plateau de réaction.

## Patentansprüche

1. Kupplungsmechanismus (1), insbesondere für Kraftfahrzeuge, aufweisend einen Deckel (2), in welchem eine ringförmige Membran (3) angeordnet ist, welche zwischen einer eingekuppelten Position und einer ausgekuppelten Position kippt, um eine Druckplatte (5) zu verlagern, welche dafür vorgesehen ist, mit einer gegenüber liegenden Reaktionsplatte derartig zusammenzuwirken, um eine Reibscheibe einzuspannen, wobei die Membran (3) um jeweils einen ersten und einen zweiten Stützbereich (6, 7) schwenkt, welche sich über den Umfang erstrecken und beiderseits der Membran (3), jeweils zwischen der Membran (3) und dem Deckel (2) und zwischen der Membran (3) und der Druckplatte (5) angeordnet sind, und eine Stützscheibe (16), welche an dem Deckel (2) montiert ist und mindestens eine ausgestreckte Fläche, zum Beispiel eine ebene Fläche, aufweist, welche sich auf einer entsprechenden Fläche (21) des Deckels (2) abstützt, wobei die Stützscheibe (16) mindestens einen Vorsprungbereich (22) aufweist, welcher den ersten Stützbereich (6) der Membran (3) bildet,
**dadurch gekennzeichnet, dass** er eine elastisch verformbare Unterstützungsscheibe aufweist, welche mindestens eine Unterstützungslasche (19) aufweist, welche dafür vorgesehen ist, sich an einem Kupplungsanschlag, welcher zur Betätigung der Membran (3) dient, oder an Fingern (4) der Membran (3) derartig abzustützen, um die auf die Membran (3) ausgeübte Belastung beim Auskuppeln zu erhöhen, und dass die Stützscheibe und die Unterstützungsscheibe aus einer einzigen und gleichen Scheibe (16) gebildet sind, welche einen ringförmigen, radial äußeren Abschnitt (17), welcher den den ersten Stützbereich (6) der Membran (3) bildenden Vorsprungbereich (22) aufweist, und einen ringförmigen, radial inneren Bereich (18) aufweist, von welchem aus sich die Unterstützungslasche (19) radial in Richtung auf das Innere erstreckt.

2. Kupplungsmechanismus (1) nach Anspruch 1, **dadurch gekennzeichnet, dass** die Stützscheibe (16) Löcher (24) aufweist, welche zur Montage von Befestigungsmitteln (25) der Stützscheibe (16) an dem Deckel (2) dienen.

3. Kupplungsmechanismus (1) nach Anspruch 1 oder 2, **dadurch gekennzeichnet, dass** der Vorsprungbereich (22) durch Tiefziehen der Stützscheibe (16) ausgebildet ist.

4. Kupplungsmechanismus (1) nach einem der Ansprüche 1 bis 3, **dadurch gekennzeichnet, dass** der Vorsprungbereich (22) ringförmig ist und sich kontinuierlich erstreckt oder von angrenzenden Segmenten gebildet ist, welche sich über den Umfang der Stützscheibe (16) erstrecken.

5. Kupplungsmechanismus (1) nach einem der Ansprüche 1 bis 4, **dadurch gekennzeichnet, dass** die ringförmigen, radial inneren und äußeren Abschnitte (17, 18) durch Verbindungsbereiche (20), welche sich radial erstrecken, miteinander verbunden sind.

6. Kupplungsmechanismus (1) nach einem der Ansprüche 1 bis 5, **dadurch gekennzeichnet, dass** der zweite Stützbereich (7) von mindestens einem Stützelement (27) gebildet ist, welches an dem Deckel (2) befestigt ist.

7. Kupplungsmechanismus (1) nach einem der Ansprüche 1 bis 6, **dadurch gekennzeichnet, dass** das Stützelement (27) einen C-förmigen Querschnitt besitzt und einen ersten Zweig (28) zur Befestigung am Deckel (2) und einen zweiten Zweig (29) aufweist, dessen freies Ende den zweiten Stützbereich (7) der Membran (3) bildet.

8. Kupplungsmechanismus (1) nach Anspruch 7, **dadurch gekennzeichnet, dass** das Stützelement (27) elastisch ist, so dass der zweite Zweig (29) dazu neigt, die Membran (3) in Anschlag mit dem Vorsprungbereich (22) der Stützscheibe (16) zu pressen.

9. Kupplungsmechanismus (1) nach einem der Ansprüche 1 bis 8, **dadurch gekennzeichnet, dass** er Verschleißnachstellmittel (8) aufweist, welche dazu geeignet sind, die Druckplatte (5) an die Reaktionsplatte näher zu bringen.

## Claims

1. Clutch mechanism (1), in particular for a motor vehicle, comprising a cover (2) in which there is housed an annular diaphragm (3) tilting between an engaged position and a disengaged position to move a pressure plate (5) intended to cooperate with an opposite reaction plate so as to clamp a friction disc, the diaphragm (3) pivoting respectively about circumferentially extending first and second bearing regions (6, 7) situated on either side of the diaphragm (3), respectively between the diaphragm (3) and the cover (2) and between the diaphragm (3) and the pressure plate (5), and a bearing washer (16) mounted on the cover (2) and comprising at least one extensive surface, for example a planar surface, bearing on a corresponding surface (21) of the cover (2), the said bearing washer (16) comprising at least one projecting region (22) forming the first bearing region (6) for the diaphragm (3), **characterized in that** it comprises an elastically deformable assistance washer, comprising at least one assistance lug (19) intended to bear against a clutch release bearing serving for actuating the diaphragm (3) or against fingers (4) of the diaphragm (3), so as to increase the force applied to the diaphragm (3) during disengagement, and **in that** the bearing washer and the assistance washer are formed from one and the same washer (16), comprising a radially outer annular part (17) comprising the projecting region (22) forming the first bearing region (6) for the diaphragm (3) and a radially inner annular part (18) from which the assistance lug (19) extends radially inwards.

2. Clutch mechanism (1) according to Claim 1, **characterized in that** the bearing washer (16) comprises holes (24) serving to mount means (25) for fastening the said bearing washer (16) to the cover (2).

3. Clutch mechanism (1) according to Claim 1 or 2, **characterized in that** the projecting region (22) is formed by stamping the bearing washer (16).

4. Clutch mechanism (1) according to one of Claims 1 to 3, **characterized in that** the projecting region (22) is of annular shape and extends continuously or is formed by adjacent segments extending over the circumference of the bearing washer (16).

5. Clutch mechanism (1) according to one of Claims 1 to 4, **characterized in that** the radially inner and outer annular parts (17, 18) are connected to one another by radially extending connecting regions (20) .

6. Clutch mechanism (1) according to one of Claims 1 to 5, **characterized in that** the second bearing region (7) is formed by at least one bearing member (27) fastened to the cover (2).

7. Clutch mechanism (1) according to one of Claims 1 to 6, **characterized in that** the bearing member (27) has a C-shaped cross section and comprises a first branch (28) for fastening to the cover (2) and a second branch (29) of which the free end forms the second bearing region (7) for the diaphragm (3).

8. Clutch mechanism (1) according to Claim 7, **characterized in that** the bearing member (27) is elastic such that its second branch (29) tends to press the diaphragm (3) into bearing contact with the projecting region (22) of the bearing washer (16) .

9. Clutch mechanism (1) according to one of Claims 1 to 8, **characterized in that** it comprises wear compensation means (8) able to move the pressure plate (5) closer to the reaction plate.
